# EUROPÄISCHE PATENTANMELDUNG

(11) **EP 1 884 407 A1**
(43) Veröffentlichungstag der Anmeldung: **06.02.2008**
(21) Anmeldenummer: 07012874.9
(22) Anmeldetag: 30.06.2007
(51) Int. Cl.: B60Q 1/54

(54) **Geschwindigkeitsaußenanzeige für Kfz**

(30) Priorität: 28.07.2006 DE 102006034954
(71) Anmelder: Geiger, Georg, 97250 Erlabrunn (DE)
(72) Erfinder: Geiger, Georg, 97250 Erlabrunn (DE)
(74) Vertreter: Pöhner, Wilfried Anton, Dr.

(57) **Zusammenfassung**

Geschwindigkeitsaußenanzeige für Kfz, bestehend aus einem Drehzahlmessgerät für die Drehzahl eines Rades des Kraftfahrzeuges, das sich auf der Fahrbahnfläche des Kraftfahrzeuges abrollt und einer Anzeige des Messwertes in Geschwindigkeitseinheiten, wie km/h oder miles/h, die an den Abrolldurchmesser des Rades anpassbar ist, wobei wenigstens eine Anzeige an einer Außenseite des Kraftfahrzeuges sichtbar ist.

## Beschreibung

Die Erfindung bezieht sich auf eine Geschwindigkeitsaußenanzeige für Kraftfahrzeuge, bestehend aus einem Drehzahlmessgerät für die Drehzahl eines Rade des Kraftfahrzeuges, das sich auf der Fahrbahnfläche des Kraftfahrzeuges abrollt und einer Anzeige des Messwertes in Geschwindigkeitseinheiten, wie km/h oder miles/h, die an den Abrolldurchmesser des Rades anpassbar ist.

Gemäß aktuellem Stand der Technik bewegen sich Kraftfahrzeuge um sehr viel schneller voran als der lenkende Mensch selbst, weshalb er diese hohen Geschwindigkeiten nur recht ungenau abschätzen kann, so dass derzeit global die Grundausstattung aller Kraftfahrzeuge ein Geschwindigkeitsmessgerät beinhaltet.

Trotzdem gehört es zu den Grunderfahrungen im Umgang von Menschen mit einem Kraftfahrzeug, dass die Geschwindigkeit sehr oft höher gewählt wird, als es für ein vertretbares Maß an Fahrsicherheit eigentlich ratsam ist. Deshalb ist die Messtoleranz des Geschwindigkeitsmessers laut Gesetz so zu wählen, dass der angezeigte Wert auf keinen Fall den tatsächlichen unterschreitet. Da das für ein real existierendes Messinstrument prinzipiell nicht möglich ist, eilt der angezeigte Geschwindigkeitsistwert dem tatsächlichen Geschwindigkeitsistwert immer um das Maß voraus, dass der Hersteller als oberen Wert für die Toleranz der Messung ermittelt hat. In dieser Regelung ist also bereits eine ganz klare, erzieherische Maßnahme des Gesetzgebers enthalten, die durch das Anzeigen einer geringfügig höheren Geschwindigkeit den Fahrer dazu motivieren soll, im Zweifelsfalle möglichst langsam zu fahren.

Nach aktuellem Stand der Kfz-Technik ist ein Display für die Geschwindigkeit im Sichtfeld des Fahrers die gesetzlich vorgeschriebene Mindestausstattung. Dabei ist es zulässig, dass die Anzeige auch am inneren Rand des Sichtbereiches angeordnet werden kann, wodurch sie für den Beifahrer ebenfalls sichtbar wird. In einigen, sehr wenigen, luxuriösen Personenkraftwagen ist auch für die Fahrgäste der zweiten Reihe eine Geschwindigkeitsanzeige - z.B. im Dachhimmel - integriert.

Ein deutliches Defizit der aktuell möglichen Ausstattung von Kraftfahrzeugen ist es jedoch, dass für andere Verkehrsteilnehmer, also für weitere Autofahrer, Motorradfahrer, Radfahrer und Fußgänger die tatsächliche Geschwindigkeit eines herannahenden Fahrzeuges nicht direkt ersichtlich ist, sondern abgeschätzt werden muss. Da der Mensch über zwei Augen verfügt, die geometrisch voneinander entfernt sind, ist ihm dadurch ein optisches Instrument in die Wiege gelegt, mit Hilfe dessen das Gehirn die Geschwindigkeit eines herannahenden Fahrzeuges abschätzen kann. Das Ergebnis dieser Bemühung ist jedoch sehr stark von den jeweiligen, persönlichen Voraussetzungen der abschätzenden Person abhängig. Dabei zeigt die Erfahrung, dass eigentlich geschwindigkeitsunabhängige Parameter wie die Farbe des Fahrzeuges, das Ergebnis der Schätzung teilweise sehr stark beeinflussen. Versuchsreihen, in denen Fahrzeuge mit stets gleicher Geschwindigkeit, jedoch wechselnden Übersetzungen und deshalb verschiedenen Geräuschen an Versuchspersonen vorbeifuhren, haben nachgewiesen, dass bei hoher Motordrehzahl, also aggressivem Fahrgeräusch, die Geschwindigkeit höher eingeschätzt wurde, als bei der Vorbeifahrt mit besonders niedriger Motordrehzahl. Ebenso wird ein sehr großes Fahrzeug, das mit der gleichen Geschwindigkeit wie ein sehr kleines fährt, häufig als schneller fahrend eingestuft.

Eine noch viel schwerere Aufgabe für die menschliche Fähigkeit, Geschwindigkeiten abzuschätzen, tritt beim Überholen eines Fahrzeuges auf einer Landstraße auf, wenn ein drittes Fahrzeug entgegen kommt. In diesem Fall ist es für alle Beteiligten überlebenswichtig, dass der Überholvorgang definitiv beendet ist, wenn das entgegenkommende Fahrzeug den Überholer erreicht hat. In dieser Situation wäre es für den Überholer sehr hilfreich, wenn er die Geschwindigkeit des Entgegenkommenden wüsste.

In zweiter Linie wäre das Wissen über die Geschwindigkeit des Überholers auch für das überholte Fahrzeug, sowie das entgegenkommende Fahrzeug eine wichtige Information, um zu entscheiden, ob der Überholvorgang zu knapp angesetzt worden ist und eine Kollision nur noch durch Bremsungen von überholtem und entgegenkommendem Fahrzeug zu vermeiden ist.

Ein weiteres Defizit des aktuellen Standes der Technik ist der hohe Aufwand, der für die Überwachung von Geschwindigkeitsgrenzen zu treiben ist. Für sämtliche Straßen des Globus gelten heute entweder Höchstgrenzen für die Geschwindigkeit oder zumindest in Abhängigkeit von den Umgebungsbedingungen gestaffelte Empfehlungen für die maximale Geschwindigkeit. Da diese Grenzwerte jedoch in der Regel mit einer sehr großen Sicherheitsreserve festgesetzt worden sind, können sie für den überwiegenden Teil der Zeit von der überwiegenden Anzahl der Verkehrsteilnehmer ohne konkret erkennbare Gefährdung und ohne einen im Moment erfassbaren Mehraufwand überschritten werden. Aus diesem Grunde werden die festgesetzten Höchstgeschwindigkeiten im Straßenverkehr sehr oft übertreten. Ein weiterer Grund dafür ist, dass für andere Verkehrsteilnehmer - wie bereits zuvor erläutert - die tatsächliche Geschwindigkeit nur ungenau abschätzbar ist und dadurch Überschreitungen der zulässigen Höchstgeschwindigkeit in einem begrenzten Rahmen der Kontrolle der Öffentlichkeit faktisch entzogen sind.

Auf diesem Hintergrund hat sich die Erfindung die Aufgabe gestellt, die tatsächliche Momentangeschwindigkeit eines Fahrzeuges an dessen Außenseite sichtbar zu machen.

Als Lösung schlägt die Erfindung eine Geschwindigkeitsaußenanzeige für Kraftfahrzeuge vor, die dadurch gekennzeichnet ist, dass wenigstens eine Anzeige an einer Außenseite des Kfz sichtbar ist.

Von ihrem physikalischen Prinzip her sind Geschwindigkeitsmessgeräte in Kraftfahrzeugen weithin bekannter Stand der Technik. Über viele Jahrzehnte waren mechanische Geschwindigkeitsmessgeräte üblich. Sie werden von einer meist flexiblen Welle angetrieben, die von einem Rad des Fahrzeuges oder von einer Welle des Antriebes hinter dem Getriebeausgang in Drehung versetzt wird. Diese Welle dreht im Messgerät eine magnetische Scheibe, zu der eine zweite, ebenfalls magnetische Scheibe in geringem Abstand koaxial angeordnet ist. Auf der Achse dieser Scheibe ist ein Zeiger angeordnet und bis zu 360° verschwenkbar. Eine Spiralfeder hält den Zeiger am Anschlag beim Geschwindigkeitswert 0. Wenn sich das Fahrzeug bewegt, dreht sich die Magnetscheibe immer schneller und überträgt das rotierende Magnetfeld auf die zweite, nur verschwenkbare Scheibe, die mit zunehmender Drehzahl der ersten Scheibe ein immer größeres Drehmoment aufbaut, das entgegen der Spiralfeder den Zeiger verschwenkt.

Diese mechanischen Anzeigen sind gemäß aktuellem Stand der Technik fast völlig durch elektronische Anzeigen verdrängt. Hier wird die Drehzahl eines Rades durch einen Drehpulsgeber direkt an einem Rad oder an einer Welle zwischen dem Ausgang des Getriebes und den angetriebenen Rädern abgenommen. Wie bei jedem digitalen Messgerät, so wird auch hier die Anzahl der Impulse in einer bestimmten, konstanten Zeit gezählt, der gezählte Wert auf die gewünschte Einheit - z.B. km/h oder m/h - umgerechnet und zur Anzeige gebracht.

Nach wie vor üblich sind sogenannte "analoge" Anzeigen, bei denen die Winkelstellung eines Zeigers proportional zum anzuzeigenden Wert ist. Als Antrieb für diesen Zeiger werden meist sogenannte "Schrittmotoren" eingesetzt, bei denen jeder zugeführte, elektrische Impuls für eine Verschwenkung der Achse um einen bauartbedingten, festen Winkel sorgt. Dadurch wird es möglich, bestimmte Bereiche der Skala zu spreizen, z.B. im Bereich der innerstädtischen Geschwindigkeiten - und andere Bereiche der Skala zu komprimieren - z.B. im Bereich nahe der Höchstgeschwindigkeit.

Von analogen und quasianalogen Anzeigen kann sehr schnell die Größenordnung des Messwertes abgelesen werden. Die Ablesefehler analoger Geräte entfallen bei digitalen Anzeigen.

Abweichend vom sonstigen Stand der Anzeigeelemente für Messgeräte haben sich im Kfz digitale Anzeigen bislang noch nicht auf breiter Front durchsetzen können, sind jedoch in einigen exotischen Fahrzeugen durchaus bekannt. Dazu zählen nicht nur die Darstellungen von Zahlen durch LED's oder Displays - wie z.B. ein LCDsondern auch Projektoren, die eine Zahl auf die Windschutzscheibe an den Rand des Sichtfeldes vom Fahrer projizieren.

Ebenso bekannt sind "quasi - analoge" Anzeigen, bei denen ein Balken oder ein Ring aus mehreren Leuchtsegmenten besteht, von denen proportional zum Geschwindigkeitsistwert eine immer größere Anzahl aufleuchtet. Vergleichsweise selten sind kreissegmentförmige Anzeigeelemente, - vergleichbar den Stücken einer Torte - bei denen mit wachsender Geschwindigkeit und Überschreiten einer bestimmten Stufe ein weiteres Tortenstück aufleuchtet, bis bei Höchstgeschwindigkeit eine kreisförmige Fläche illuminiert ist.

Ebenfalls denkbar, bisher jedoch unüblich sind ringförmige Anzeigeelemente, die konzentrisch zueinander angeordnet sind. In der niedrigsten Geschwindigkeitsstufe leuchtet nur ein Punkt in der Mitte der Anzeige mit steigender Geschwindigkeit wird der effektive Radius der beleuchteten Fläche immer größer. Alle zuvor geschilderten Prinzipien einer Anzeige sind bekannt und für die Anzeige des Geschwindigkeitsistwertes eines Kraftfahrzeuges sowohl innen wie auch nach außen hin geeignet.

Wenigstens eine Anzeige nach einem dieser Prinzipien kann an jedem Punkt der Außenseite des Fahrzeuges angebracht werden. Dabei ist eine Anzeige an der Fahrzeugunterseite nach derzeitigem Stand der Verwendung von Fahrzeugen nicht sinnvoll, aber eine Anbringung an den Seitenflächen oder auf dem Dach für bestimmte Personengruppen nutzbar.

Eine Anzeige auf dem Dach wäre von Fluggeräten, Wohnhäusern oder Brücken aus ablesbar, Anzeigen an den Seiten von anderen Verkehrsteilnehmern und von Personen am Rand der Straßen. Die Erfindung schlägt verschiedene Orte für die Anbringung einer Anzeige vor, die jeweils spezifische Vorzüge haben.

Eine Anzeige hinter einer Fensterscheibe des Kfz ist nach außen hin gut sichtbar, sehr gut gegen Witterungseinflüsse geschützt und mit geringem Aufwand auch nachträglich montierbar. Dazu zählt eine Anzeige auf der Außenseite des Innenrückspiegels, der in aller Regel nahe an oder auf der Windschutzscheibe angeordnet ist.

Eine Anzeige in der Außenseite eines Außenrückspiegels ist gut von vorne erkennbar und könnte in einer weiteren Ausführungsvariante auch zugleich als Fahrtrichtungsanzeiger - Blinker - genutzt werden. Eine Anzeige in einer Stoßstange oder an deren Rändern kann vorteilhaft als balkenförmige Anzeige ausgestaltet werden, mit dem Vorteil, dass ohne allzu massive Eingriffe in die Gestaltung der Fahrzeugfront und/oder des Fahrzeugsheck eine sehr große und daher weithin sichtbare Anzeige ermöglicht. Mehrfachfunktionen als Tagfahrlicht, und/oder Nebelscheinwerfer und/oder Blinklicht sind denkbar.

Die Fläche des Kühlergrills bietet sich vor allem für relativ große, analoge oder quasi - analoge Anzeigen an. Ebenfalls an der Fahrzeugfront oder am Fahrzeugheck sind ringförmige oder balkenförmige oder dreieckige Anzeigen denkbar, die in einer weiteren Variante an Beleuchtungsflächen angegliedert oder darin integriert werden könnten.

Weitere, sinnvolle Ausführungsvarianten sind die Doppelfunktion von Geschwindigkeitsanzeige und Fahrtrichtungsanzeige oder Positionsleuchte oder Tagfahrlicht.

Eine weitere, interessante Alternative ist es, dass das Anzeigedisplay abwechselnd die Geschwindigkeit und das Kennzeichen des Fahrzeuges wiedergibt. Der Vorteil ist, dass keine zusätzlichen Flächen für die Geschwindigkeitsanzeige bereit gestellt werden müssen, dass weithin standardisierte Geräte verwendbar sind und dass eine getrennte Beleuchtung des Kennzeichens entfällt.

Als eine weitere, vorteilhafte Ausführungsform schlägt die Erfindung vor, dass das Geschwindigkeitsdisplay an der Außenseite auch zur Darstellung von anderen Informationen nutzbar ist. Denkbar ist, dass darauf vorgewählte Symbole darstellbar sind, oder vorgewählte Texte angezeigt werden können oder sogar beliebige Buchstaben und/oder Zeichen und/oder Ziffern aktiviert werden können. Vorteilhafterweise werden die anzuzeigenden, graphischen Elemente vom Innenraum des Fahrzeuges ausgewählt, z.B. durch ein Tastenfeld.

Als eine weitere Variante für die Anzeige des Geschwindigkeitsistwertes nach außen hin nennt die Erfindung Anzeigeelemente von unterschiedlicher Farbe. Denkbar ist ein einziges Anzeigelement, dessen Farbe sich verändert oder ein Anzeigeelement aus mehreren Teilen, das in Abhängigkeit vom anzuzeigenden Geschwindigkeitsistwert durch immer weitere Farben ergänzt wird.

Als weitere, interessante Funktion schlägt die Erfindung vor, dass der Geschwindigkeitsistwert nach außen hin nicht nur optisch erkennbar ist, sondern auch oder alternativ über ein elektromagnetisches Signal oder ein Infrarotsignal nach außen hin abgegeben wird. Mit dafür geeigneten Empfängern können andere Verkehrsteilnehmer den Geschwindigkeitsistwert erfassen und auswerten, ebenso könnten stationäre Auswerteeinrichtungen den Istwert empfangen. Diese stationären Einrichtungen könnten dem Fahrer daraufhin zurück signalisieren, dass er entweder extrem langsam fährt oder dass er sich zu schnell bewegt oder um wie viel er zu schnell fährt und im Normalfall nichts signalisieren und dadurch den Verkehrsteilnehmer von der Auswertung zusätzlicher Informationen entlasten.

Naheliegend ist, dass für die Geschwindigkeitsüberwachung zuständige Organisationen, wie z.B. die Polizei die Geschwindigkeitsaußenanzeige für eine manuelle Geschwindigkeitsüberwachung nutzen könnte und/oder elektromagnetisch oder über Infrarot abgestrahlte Signale automatisch erfassen und auswerten könnte. Als ein Vorteil dieser Anwendung der Erfindung ergibt sich mit einiger Wahrscheinlichkeit eine erhebliche Verbesserung der Einhaltung der vorgegebenen Geschwindigkeitsgrenzen, so dass bei der Festlegung der zulässigen Höchstgeschwindigkeit bisher erforderliche Sicherheitsreserven reduziert werden können und eine Anwendung der Erfindung in breitem Maßstab dazu führt, dass letzten Endes eine höhere Geschwindigkeit des Verkehrsflusses ermöglicht wird.

Als eine weitere, zusätzliche Option schlägt die Erfindung vor, dass nicht nur der Geschwindigkeitsistwert, sondern auch die Änderung der Geschwindigkeit, also das Beschleunigen oder das Verzögern angezeigt wird. Auch dadurch wird es anderen Verkehrsteilnehmern deutlich erleichtert, das jeweilige Verhalten der Fahrer von anderen am Verkehrsfluss beteiligten Fahrzeuge einzuschätzen.

Im folgenden sollen weitere Einzelheiten und Merkmale der Erfindung anhand von Beispielen näher erläutert werden. Sie sollen die Erfindung jedoch nicht einschränken, sondern nur erläutern.

Es zeigt in schematischer Darstellung:
- **Figur 1**: Dreidimensionale Darstellung eines Pkw mit Geschwindigkeitsanzeige in den Rückspiegeln und auf der Fahrertür
- **Figur 2**: wie Figur 1, jedoch mit Geschwindigkeitsanzeige parallel zur Stoßstange
- **Figur 3**: wie Figur 1, jedoch mit Geschwindigkeitsanzeige im Kennzeichen
- **Figur 4**: wie Figur 1, jedoch mit quasi analoger Geschwindigkeitsanzeige im Grill
- **Figur 5**: wie Figur 1, jedoch mit digitaler Geschwindigkeitsanzeige im Grill

Die Figuren zeigen im Einzelnen:

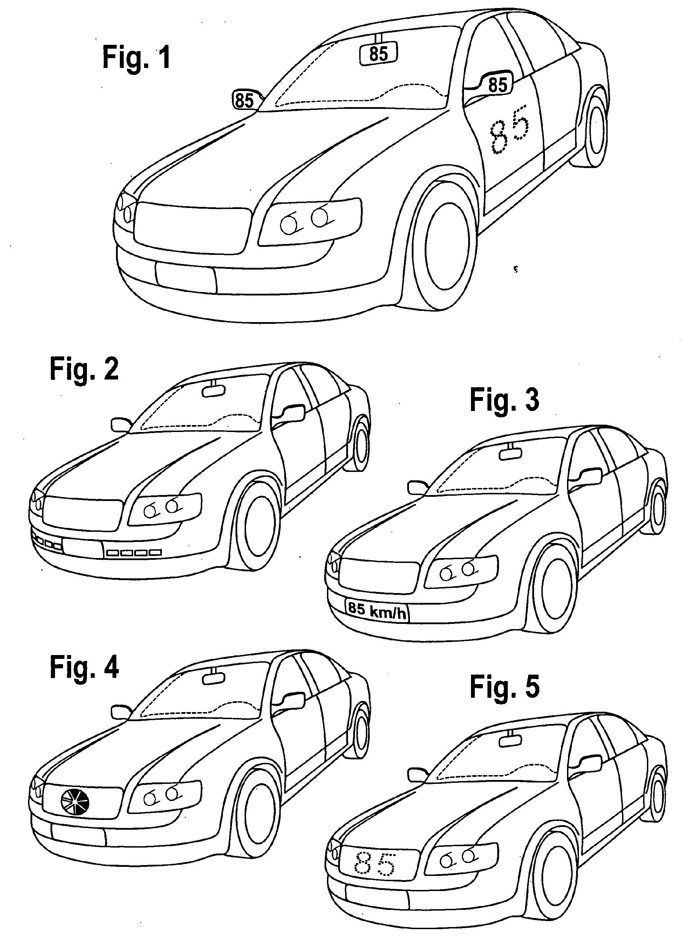

In **Figur 1** ist die dreidimensionale Darstellung eines Pkw mit vier möglichen Anbringungsorten für die Außenanzeige gezeichnet, die hier durch die Darstellung der Zahl "85" symbolisiert ist. Eine Außenanzeige in den Rückspiegeln ist eine vergleichsweise auffällige Position. In Figur 1 wird deutlich, dass die Anbringung an diesem Ort die Verwendung von standardisierten Außenrückspiegeln ermöglicht. Eine Integration dieser Baugruppe in die übrigen, elektrischen Baugruppen eines Außenrückspiegels ist sinnvoll.
Als weitere Variante ist die Anbringung einer Geschwindigkeitsaußenanzeige in der Vorderseite des Innenrückspiegels gezeigt. Zwar ist die Anzeige an dieser Stelle ebenfalls recht gut erkennbar, es sei denn Lichtreflexionen in der Frontscheibe würden Sie überstrahlen.
Auch hier wäre die Verwendung von standardisierten Elementen denkbar.
Als weitere Alternative wird in Figur 1 eine Geschwindigkeitsaußenanzeige auf der Fahrertür dargestellt und dabei deutlich, dass dieser Anbringungsort vergleichsweise besonders große Zahlen darstellbar macht, jedoch in dieser Größe auch den größten Aufwand erfordert. Deshalb ist im Ausführungsbeispiel von Figur 1 die Zahl nicht durch eine durchgezogene Linie, sondern nur durch einige Leuchtpunkte dargestellt. In Figur 1 wird plausibel, dass die Anpassung dieser Leuchtpunkte an verschiedene Fahrzeugtypen mit beschränktem Aufwand möglich ist, da lediglich Bohrungen im Blech der Fahrertür erforderlich sind. Ansonsten könnten Standardleuchtelemente benutzt werden.
In **Figur 2** ist als eine weitere Alternative ein Fahrzeug wiedergegeben, das eine balkenförmige Anzeige des Geschwindigkeitsistwertes oberhalb der Stoßstange aufweist. Zu beiden Seiten des Kühlergrills sind jeweils vier Anzeigeelemente erkennbar. In dieser Variante wird der Geschwindigkeitsistwert in vier Stufen dargestellt. Wenn jedes der insgesamt acht dargestellten Anzeigeelemente z.B. einer Geschwindigkeit von 28 km/h entspricht, würde die Anzeige des für diese Beispielsseite gewählten Wertes von 85 das Aufleuchten der ersten drei Anzeigeelemente von links ergeben. Das Aufleuchten von allen acht Anzeigeelementen entspräche einem Geschwindigkeitsistwert von 224 und das Aufleuchten nur eines Anzeigeelementes, vorzugsweise des ganz links dargestellten, entspräche einer Geschwindigkeit zwischen 0 und 28 km/h.
In **Figur 3** ist die Doppelfunktion von Geschwindigkeitsaußenanzeige und Kennzeichen dargestellt. Deutlich wird, dass das Kennzeichen in aller Regel eine höhere Anzahl von Zeichen hat als zur Anzeige des Geschwindigkeitsistwertes erforderlich sind. Mit diesen weiteren Zeichen könnte z.B. die Messeinheit für den Geschwindigkeitsistwert dargestellt werden, was insbesondere in der Einführungsphase die Identifikation des angezeigten Wertes als Geschwindigkeitsistwert sehr stark erleichtern würde.
In **Figur 4** ist als Variante eine quasi analoge Anzeige im Kühlergrill zu sehen. Hier sind tortenstückförmige Kreissegmente als Indikator für eine von in diesem Beispiel sieben denkbaren Geschwindigkeitsstufen gezeichnet. In Figur 4 ist von sieben möglichen Fahrgeschwindigkeitsstufen die dritte erreicht.
In **Figur 5** ist eine digitale Anzeige in den Kühlergrill integriert. Ähnlich wie in Figur 1 ist für die Darstellung dieser (vergleichsweise großen) Zahlen ein Display aus einer Punktmatrix gewählt. Deren prinzipieller Vorteil ist, dass zwischen den einzelnen Lichtpunkten viel Fläche zum Eintreten der Kühlluft verbleibt.

## Patentansprüche

1. Kfz mit Geschwindigkeitsaußenanzeige, bestehend aus einem Drehzahlmessgerät für die Drehzahl eines Rades des Kraftfahrzeuges, das auf der Fahrbahnfläche abrollt und einer Anzeige des Messwertes in Geschwindigkeitseinheiten, wie km/h oder miles/h, die an den Abrolldurchmesser des Rades anpassbar ist, **dadurch gekennzeichnet, dass** wenigstens eine Anzeige
- an einer Außenseite des Kraftfahrzeuges angeordnet oder
- von außen einsehbar ist.

2. Kfz mit Geschwindigkeitsaußenanzeige nach Anspruch 1, **dadurch gekennzeichnet, dass** der Messwert durch eine Zahl anzeigbar ist.

3. Kfz mit Geschwindigkeitsaußenanzeige nach einem der vorhergehenden Ansprüche, **dadurch gekennzeichnet, dass** der Messwert mit einem Zeiger anzeigbar ist.

4. Kfz mit Geschwindigkeitsaußenanzeige nach einem der vorhergehenden Ansprüche, **dadurch gekennzeichnet, dass** der Messwert durch mehrere,
- auf einer Linie oder
- auf einem Ring oder
- als Kreissegment oder
- auf mehreren, zueinander konzentrischen Ringen angeordnete Anzeigeelementen anzeigbar ist.

5. Kfz mit Geschwindigkeitsaußenanzeige nach einem der vorhergehenden Ansprüche, **dadurch gekennzeichnet, dass** wenigstens eine Anzeige auf dem Dach und/oder an einer Längsseite und/oder an der Frontseite und/oder an der Heckseite angebracht ist.

6. Kfz mit Geschwindigkeitsaußenanzeige nach einem der vorhergehenden Ansprüche, **dadurch gekennzeichnet, dass** wenigstens eine Anzeige hinter einem Fenster des Kfz angebracht ist.

7. Kfz mit Geschwindigkeitsaußenanzeige nach einem der vorhergehenden Ansprüche, **dadurch gekennzeichnet, dass** wenigstens eine Anzeige in die Vorderseite des Innenrückspiegels integriert ist.

8. Kfz mit Geschwindigkeitsaußenanzeige nach einem der vorhergehenden Ansprüche, **dadurch gekennzeichnet, dass** wenigstens eine Anzeige an der Außenseite eines Außenrückspiegels angebaut ist.

9. Kfz mit Geschwindigkeitsaußenanzeige nach einem der vorhergehenden Ansprüche, **dadurch gekennzeichnet, dass** wenigstens eine Anzeige an oder in der Stoßstange befestigt ist.

10. Kfz mit Geschwindigkeitsaußenanzeige nach einem der vorhergehenden Ansprüche, **dadurch gekennzeichnet**, das wenigstens eine Anzeige in den Kühlergrill eingebaut ist.

11. Kfz mit Geschwindigkeitsaußenanzeige nach einem der vorhergehenden Ansprüche, **dadurch gekennzeichnet, dass** wenigstens eine Anzeige an der Fahrzeugfront montiert ist.

12. Kfz mit Geschwindigkeitsaußenanzeige nach einem der vorhergehenden Ansprüche, **dadurch gekennzeichnet, dass** wenigstens eine Anzeige an der Fahrzeugrückseite angeordnet ist.

13. Kfz mit Geschwindigkeitsaußenanzeige nach einem der vorhergehenden Ansprüche, **dadurch gekennzeichnet, dass** durch das Anzeigedisplay abwechselnd die Geschwindigkeit und das Kennzeichen des Kfz wiedergebbar sind.

14. Kfz mit Geschwindigkeitsaußenanzeige nach einem der vorhergehenden Ansprüche, **dadurch gekennzeichnet, dass** das Display auch zur Darstellung von anderen Informationen nutzbar ist.

15. Kfz mit Geschwindigkeitsaußenanzeige nach Anspruch 14, **dadurch gekennzeichnet, dass** vorgewählte Symbole darstellbar sind.

16. Kfz mit Geschwindigkeitsaußenanzeige nach Anspruch 14, **dadurch gekennzeichnet, dass** vorgewählte Texte anzeigbar sind.

17. Kfz mit Geschwindigkeitsaußenanzeige nach Anspruch 14, **dadurch gekennzeichnet, dass** beliebige Buchstaben und/oder Zeichen und/oder Ziffern auf der Anzeige aktivierbar sind.

18. Kfz mit Geschwindigkeitsaußenanzeige nach Anspruch 17, **dadurch gekennzeichnet, dass** die anzuzeigenden Elemente vom Innenraum des Fahrzeuges aus wählbar sind, z.B. durch ein Keyboard.

19. Kfz mit Geschwindigkeitsaußenanzeige nach einem der vorhergehenden Ansprüche, **dadurch gekennzeichnet, dass** der Geschwindigkeitsistwert durch mehrere Elemente unterschiedlicher Farbe anzeigbar ist.

20. Kfz mit Geschwindigkeitsaußenanzeige nach einem der vorhergehenden Ansprüche, **dadurch gekennzeichnet, dass** der Geschwindigkeitsistwert über ein elektromagnetisches Signal oder ein Infrarotsignal vom Kfz nach außen hin gesendet wird.

21. Kfz mit Geschwindigkeitsaußenanzeige nach einem der vorhergehenden Ansprüche, **dadurch gekennzeichnet, dass** zusätzlich zum Geschwindigkeitsistwert auch die Geschwindigkeitsänderung, also Bremsen oder Beschleunigung, anzeigbar ist.
